# DEMANDE DE BREVET EUROPEEN

(11) **EP 1 439 345 A1**
(43) Date de publication de la demande: **21.07.2004**
(21) Numéro de dépôt: 04009949.1
(22) Date de dépôt: 21.07.2000
(51) Int. Cl.: F16L 59/14, E21B 36/00, C09K 21/14

(54) **Mousse végétale et procédé de préparation**

(30) Priorité: 27.07.1999 FR 9909769
(62) Demande divisionnaire de: 00954701.9
(71) Demandeur: Ulice, 63200 Riom (FR); Institut Français du Pétrole, 92852 Rueil-Malmaison Cedex (FR)
(72) Inventeur: Kohler, Norbert, 78670 Villennes Sur Seine (FR); Jarrin, Jacques, 92000 Nanterre (FR); Reynes, Pierre, 63200 Riom (FR); Messager, Arnaud, 63200 Riom (FR)
(74) Mandataire: Fleurance, Raphael

(57) **Abrégé**

La présente invention concerne une mousse végétale constituée par au moins une farine et/ou un amidon non gélatinisé, un plastifiant, et dont la teneur en eau est inférieure à 10 %, ainsi qu'un procédé de préparation d'une telle mousse végétale, consistant à :
- à mélanger une farine et/ou de l'amidon avec un ou plusieurs plastifiants, et éventuellement un ou plusieurs additifs,
- à chauffer le mélange,
- à expanser le mélange pour obtenir une mousse dont la teneur en eau est inférieure à 10%, et de préférence de l'ordre de 5%.

Selon l'invention, une telle mousse peut être appliquée à l'isolation thermique.

## Description

L'invention concerne des mousses végétales, présentant notamment des caractéristiques spécifiques à la présente application d'isolation thermique, et leurs procédés de préparation.

Un domaine d'application privilégié de la présente invention est celui du transport des hydrocarbures produits par des puits forés dans le sol. En général, un puits foré est cuvelé sur toute sa longueur à l'aide de tubes d'aciers ou "casings". Cette colonne est cimentée, la restauration de la communication avec la roche réservoir étant effectuée par forage ou perforations. L'effluent produit par la roche réservoir est remonté à la surface par l'intermédiaire d'une autre colonne tubulaire ou "tubing" de production placée dans le puits. Ainsi, cette disposition crée un espace annulaire entre le tube de production et l'intérieur de la colonne de "casings". Il est clair que les conditions de pression et de température de l'effluent évoluent au cours de son écoulement dans la colonne de production. Il est connu que les variations de pressions et/ou de température peuvent être néfastes à un écoulement correct, par exemple à cause de dépôts de paraffines, d'apparition de cristaux d'hydrate ou d'autres dépôts minéraux ou organiques résultant d'une précipitation. Par ailleurs, lors de la production de brut visqueux, l'action des variations de température et/ou de pression peut entraîner une forte augmentation de la viscosité rendant difficile leur pompage et leur transport. Une des solutions pour éviter ces problèmes est d'isoler thermiquement la colonne de production de façon à contrôler la température de l'effluent.

Il existe à ce jour plusieurs techniques d'isolation thermique. On peut isoler la colonne en utilisant des tubes comportant un matériau isolant déposé ou fixé à l'extérieur des tubes. Cette méthode est très coûteuse et les tubes sont difficiles à manipuler. On peut aussi remplir l'annulaire d'un fluide plus ou moins isolant, gasoil gélifié, ou mousse rigide fabriquée in situ. Les liquides ne sont pas de très bons isolants, les gels sont opérationnellement délicats à mettre en oeuvre et peu stables en température, la fabrication des mousses rigides est difficile à contrôler et leur mise en place dans l'annulaire bloque la colonne de tubings dans le puits empêchant ainsi le retrait complet de la colonne. En effet, il est courant qu'au cours de la production du puits, il soit nécessaire de remonter toute la colonne de tubings de production, par exemple à cause de détériorations, de bouchages, ou pour intervenir sur des équipements ou installations en fond de puits. Dans le cas de solides présents dans l'annulaire, ceux ci doivent pouvoir être retirés ou éliminés.

Le document FR-2536386 décrit un nouveau matériau pour l'isolation thermique des puits de production constitué par une mousse de silicate de métal alcalin qui présente théoriquement le double avantage de pouvoir être fabriquée in situ et de pouvoir se solubiliser dans l'eau. En réalité, compte tenu des difficultés de contrôle, notamment de l'évolution des réactions chimiques au fond d'un puits, la mousse formée est assez hétérogène et relativement longue à être dissoute.

Le document FR-2741420 décrit un système d'isolation thermique à partir d'un aérogel. Ce produit est coûteux et relativement complexe à mettre en oeuvre.

Le document EP 087 847 décrit un procédé de préparation d'une mousse à partir d'amidon gélatinisé en présence de 10 à 30% d'eau et d'un agent expansant tel que le CO₂ (caractéristique essentielle de cette mousse). Mais cette mousse présente deux désavantages majeurs, le traitement préalable de l'amidon (gélatinisation de l'amidon) et sa haute teneur en eau qui ne permettent pas son utilisation dans les puits comme isolant thermique. En outre, aucune application dans le domaine du transport des hydrocarbures produits par des puits forés dans le sol n'est mentionnée.

L'invention concerne une mousse végétale constituée par au moins une farine et/ou au moins un amidon non gélatinisé, un ou plusieurs plastifiants et éventuellement un ou plusieurs additifs, et dont la teneur en eau est inférieure à 10%, et de préférence de l'ordre de 5%.

Une mousse végétale selon l'invention est caractérisée par les propriétés suivantes:
- une conductivité thermique comprise entre 0,03 et 0,06 W/m.°K
- et une solubilité dans un fluide aqueux.

L'invention comprend également un procédé de préparation d'une mousse végétale, caractérisé en ce qu'il consiste :
- à mélanger une farine et/ou de l'amidon avec un ou plusieurs plastifiants, et éventuellement un ou plusieurs additifs,
- à chauffer le mélange,
- à expanser le mélange pour obtenir une mousse dont la teneur en eau est inférieure à 10%, et de préférence de l'ordre de 5%.

Les paramètres de préparation liés à la cuisson-extrusion sur BC45 peuvent être :
- Débit matière (kg/h) : 1 à 200,
- % d'eau ajoutée : 0 à 10,
- Température (°C) : 20 à 300,
- Vitesse de vis (rpm) : 5 à 600.

Le plastifiant utilisé peut être du glycérol dont le pourcentage d'incorporation peut varier de 1 à 60% en poids et de préférence de 10 à 40%.

Les additifs peuvent être des pigments, des fongicides, des sucres, des agents structurant, des agents expansant, des fibres de cellulose, des alcools, dont le taux d'incorporation peut varier de 0 à 99%, et de préférence de 0 à 30% en poids.

Le mélange, le chauffage et l'expansion peuvent consister en une cuisson-extrusion bi-vis ou mono-vis à des températures comprises entre 10 et 300°C, et de préférence entre 20 et 250°C.

Selon l'invention, il est prévu une méthode d'isolation thermique, dans laquelle un volume, défini par l'espace compris entre une première enveloppe interne à une deuxième enveloppe, est rempli par des particules de mousse végétale.

Le volume ainsi défini, peut être un espace annulaire défini par l'extérieur d'une conduite placée dans un autre conduit.

On peut solubiliser le volume de mousse végétale par un fluide aqueux de façon à permettre la libre remontée de la conduite interne.

Le fluide aqueux peut être de la soude environ 1N.

Les particules de mousse peuvent avoir une taille moyenne inférieure à 5 mm.

La mousse végétale peut comprendre au moins: une farine et/ou un amidon non gélatinisé, un plastifiant, éventuellement un autre additif, une teneur en eau inférieure à 10% et de préférence inférieure à 5%.

Selon l'invention, une installation est constituée par une première enveloppe placée dans une seconde enveloppe. L'espace compris entre les deux enveloppes comporte un volume de particules de mousse végétale comme isolant thermique.

Les enveloppes peuvent consister en une colonne de tubes de transport d'un effluent pétrolier placée dans un autre conduit, par exemple un puits.

Les particules de mousse végétale peuvent avoir les propriétés suivantes: une conductivité thermique comprise entre 0,03 et 0,06 W/m.°K et une solubilité au moins partielle dans un fluide aqueux.

Les particules de mousse végétale peuvent comprendre au moins: une farine et/ou un amidon non gélatinisé, un plastifiant, éventuellement un autre additif, une teneur en eau inférieure à 10% et de préférence inférieure à 5%.

L'espace entre les deux enveloppes peut comporter en outre l'un au moins des isolants suivants: des particules de mousse de silicate, des particules de mousse d'aérogel, des poudres sèches.

Les particules de type "mousse végétale" utilisées dans le cadre de la présente invention sont définies comme suit :
- type I constitué par au moins une farine céréalière avec au moins un plastifiant et éventuellement un ou plusieurs additifs acceptables.
- type II constitué par au moins un amidon céréalier non gélatinisé avec au moins un plastifiant et éventuellement un ou plusieurs additifs acceptables.

On peut rappeler que l'expression "farine céréalière" qui est employée dans l'invention décrit des matières végétales issues de céréales dont les compositions, en fonction des différents ingrédients de base, sont les suivantes (pourcentages pondéraux) :
- teneur en eau inférieure à 20%, et de préférence comprise entre 10 et 15%,
- teneur en composés carbohydratés inférieure à 85%, et de préférence comprise entre 50 et 80%, dont la teneur en amidon est inférieure à 80%, et de préférence comprise entre 60 et 75%,
- teneur en protéines inférieure à 30%, et de préférence comprise entre 5 et 15%,
- teneur en acides gras inférieure à 10%, et de préférence comprise entre 0,5 et 5%,
- teneur en minéraux inférieure à 5%, et de préférence comprise entre 0,5 et 2%,
- teneur en fibres inférieure à 20%, et de préférence comprise entre 5 et 10%.

Par composés carbohydratés, protéines, acides gras, minéraux et fibres, on entend les multiples produits et molécules décrits de manière classique par de nombreux auteurs de référence dans le domaine des compositions de matières céréalières. Citons par exemple : "La composition des aliments. Tableaux des valeurs nutritives" - Souci/Fachmann/Kraut - 5^{ième} Edition - CRC Press.

Le tableau suivant présente, à titre d'exemple, des farines céréalières utilisables selon l'invention : des farines de blé (type T55), de maïs et de blé complet.

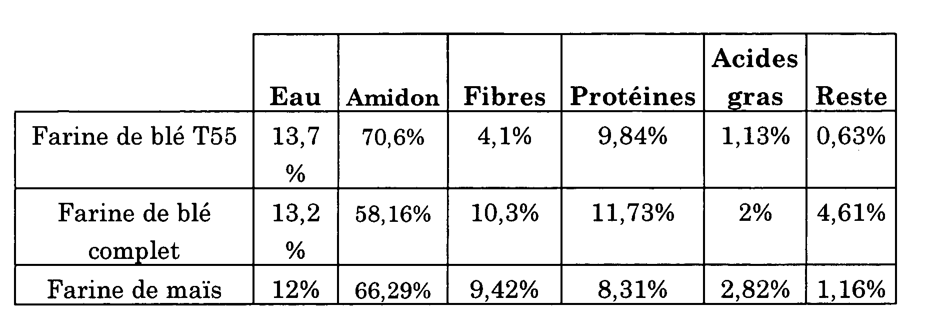

En ce qui concerne l'amidon, qui est un élément important dans une farine, celui-ci est constitué d'un mélange de deux polymères du glucose : l'amylose et l'amylopectine. Le ratio entre ces deux molécules est différent selon les céréales et les variétés comme le montre le tableau ci-dessous pour le blé et le maïs natifs et deux types de variété de maïs.

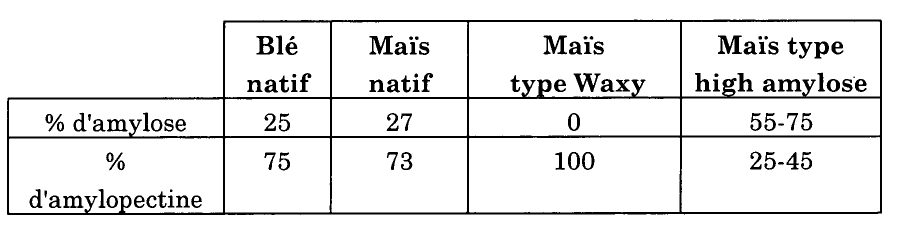

Il convient de noter que le ratio amylose/amylopectine peut être modifié par des transformations génétiques à partir des souches naturelles.

Pour les mousses végétales de l'invention, on pourra sélectionner une ou plusieurs variétés céréalières bien déterminées afin que, par exemple, le ratio amylose/amylopectine soit le plus favorable à l'obtention du produit fini en fonction de l'utilisation envisagée.

Les farines céréalières ou l'amidon utilisés dans l'invention peuvent subir différentes opérations avant leur mélange avec les autres ingrédients constitutifs des mousses (plastifiants et additifs). Ces opérations peuvent être par exemple :
- du séchage avec un pourcentage final inférieur à 15%, et de préférence comprise entre 1 et 3%, et/ou
- du broyage avec une granulométrie finale comprise entre 0,1 et 2000 µm et/ou
- du tamisage et/ou
- de la turbo séparation.

Le pourcentage pondéral d'incorporation des farines et/ou de l'amidon dans les mousses végétales pourra être compris entre 1 et 99% et préférentiellement entre 40 à 75%.

Les plastifiants utilisés dans l'invention ont pour objectif principal de favoriser la plastification de l'amidon présent dans la matière végétale choisie. Ces plastifiants pourront être par exemple de l'urée, de l'eau ou du glycérol. Le pourcentage d'incorporation de ces plastifiants pourra varier de 1 à 60% en poids et préférentiellement de 10 à 40%.

Les additifs utilisés dans l'obtention des mousses peuvent être de différentes natures. Citons par exemple :
- des pigments
- des fongicides
- des sucres
- des agents structurant, par exemple de la mélamine
- des agents expansant
- des fibres de cellulose : cellulose, sons d'origine céréalière, du bois, etc...
- des alcools.

Le taux d'incorporation de ces additifs pourra varier de 1 à 60% et de préférence entre 1 et 30% en poids.

Les mousses végétales de l'invention présentent l'avantage d'être préparées par un procédé continu. Ce procédé permet de mélanger, de chauffer et d'expanser les ingrédients afin d'obtenir les mousses utilisables de façon avantageuse selon l'invention. Les températures sont comprises entre 10 et 300°C et de préférence entre environ 20°C et 250°C. Avantageusement, le mélange, le chauffage et l'expansion des produits végétaux consistent en une cuisson-extrusion bi-vis ou mono-vis. Cette opération peut être réalisée dans un cuiseur-extrudeur de type BC 45 commercialisé par la Société CLEXTRAL.

Les paramètres liés à la cuisson-extrusion sur BC 45 sont donnés dans le tableau suivant.

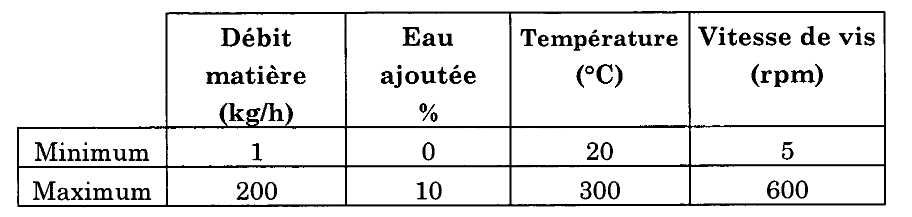

Avantageusement, après l'expansion, les mousses sont refroidies puis découpées par toute technique appropriée afin d'obtenir des particules de longueur et/ou de taille adaptée à une utilisation optimale. Pour l'application dans les annulaire entre canalisations, les particules auront de préférence une taille moyenne inférieure à 5 mm, par exemple en disque, cylindre, cube.

Des essais de caractérisation ont été effectués sur une mousse préparée selon les spécifications ci-dessus. Elle se présente sous forme de petits cylindres, par exemple, de hauteur sensiblement égale au diamètre.

Une mesure de conductivité a tout d'abord été réalisée à l'aide du conductimètre Rapid K. Le tableau ci-dessous montre que la conductivité thermique de 0,038 W/m.°K mesurée sur les particules de mousse végétale est comparable à la conductivité de la mousse de polysilicate, et bien inférieure à celle d'un gel de gasoil, solution actuellement utilisée sur les puits.

Des tests de solubilité ont été effectués à partir de 1 g de mousse dispersée sous agitation dans 100 ml de liquide. On constate que la mousse est totalement soluble dans de la soude 1N ce qui démontre sa supériorité sur les mousses de polysilicate qui ne sont que partiellement solubles dans de la soude 4N. Ces mousses présentent donc l'avantage de permettre la libre remontée du tubage.

Des essais de stabilité thermique en étuve montrent que la perte en poids de ces mousses est respectivement de 8% à 70°C et 27% à 100°C après 670 heures (28 jours) de mise en Lempérature. Pour ces deux températures et après 28 jours la conductivité thermique des mousses s'établit respectivement à 0,049 et 0,050 W/m.°K ce qui est toujours très en dessous des valeurs de conductivité d'un isolant industriel tel que le gasoil. La perte en poids peut être diminuée avec des qualités de mousse autorisant une faible teneur en eau, par exemple inférieure à 5%.

Tableau : Propriétés comparatives de différents isolants

| **Produit isolant** | **Conductivité thermique en W/m.°K** | **Retrait ou élimination** |
|---|---|---|
| Mousse végétale naturelle | 0,038 | Dissolution à la soude 1N |
| Mousse de polysilicate | 0,035 | Dissolution partielle à la soude 4N |
| Gel de gasoil | 0,180 | Dilution et pompage |

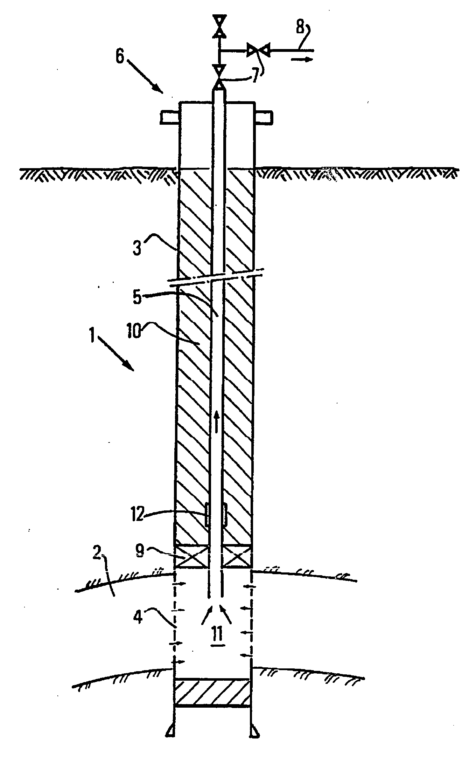

La présente invention sera mieux comprise et ses avantages apparaîtront plus clairement à la lecture des exemples suivants, nullement limitatifs, illustrés par la figure unique représentant schématiquement un puits pétrolier équipé d'une colonne de production isolée selon la méthode de l'invention.

La figure unique représente en coupe schématique un puits pétrolier 1 pour l'exploitation des hydrocarbures contenus dans la roche réservoir 2. Le trou foré est cuvelé par une colonne de tubes 3. Un ensemble de perforations 4 restaure la liaison couche/trou afin que les hydrocarbures s'écoulent comme symbolisé par les flèches de la figure. Une colonne de production 5, généralement constituée par un assemblage d'éléments tubulaires de longueur environ 10 m, est descendue dans le puits de façon que son extrémité avoisine la zone perforée 4 du cuvelage 3. L'extrémité supérieure de la colonne de production 5 est conventionnellement suspendue sur les éléments de la tête de puits 6. Un ensemble de vannes 7 contrôle le débit de l'effluent dans la conduite de collecte de surface 8.

Un moyen d'étanchéité ou packer 8 isole l'espace annulaire 10 de l'espace 11 rempli par les hydrocarbures. L'espace annulaire 10 est rempli totalement ou partiellement par des particules de mousse végétale telle que décrite, afin de constituer un manchon isolant à une profondeur donnée et sur une hauteur déterminée.

La colonne de production 5 comprend de préférence une vanne de circulation 12 dont l'ouverture, généralement par une chemise coulissante, permet de circuler un fluide par l'espace intérieur du tube de production vers la surface en remontant dans l'annulaire 10, ou dans le sens inverse. Cette vanne de circulation peut être utilisée pour chasser hors du puits les particules de mousse isolante ou dissoudre lesdites particules en les baignant dans un fluide adéquat.

L'invention ne se limite pas aux seuls puits pétroliers, il est clair qu'elle peut s'appliquer à tous systèmes équivalents, par exemple les pipelines à doubles parois (pipe-in-pipe), ou des enveloppes de réservoir à double parois.

De plus, un mélange d'un ou plusieurs autres isolants thermiques avec les mousses végétales selon l'invention peut également convenir dans la méthode d'isolation thermique de l'invention. Comme autres isolants thermiques, on peut citer les particules d'aérogels, les particules de mousse de polysilicate, les poudres sèches, par exemple de la vermiculite, des cendres volantes, du noir de carbone.

A titre d'exemple, un procédé pour l'obtention d'une mousse du type I est décrit comme suit.

La farine céréalière utilisée dans cet exemple est une farine de blé de type T55 séchée jusqu'à environ 2% d'eau.

Le plastifiant utilisé est du glycérol de pureté 99,9%.

Le tableau suivant indique les principaux paramètres utilisés pendant la cuisson-extrusion pour obtenir les mousses végétales selon l'invention.

| | |
|---|---|
| Température (°C) | 140 |
| Débit matière (kg/h) | 35 |
| Eau ajoutée (1/h) | 3 |
| Vitesse de vis (rpm) | 80 |

Les mousses obtenues sont expansées directement en sortie du cuiseur-extrudeur. Les dimensions des particules sont d'environ 1 à 2 mm de long et de 1 à 2 mm de diamètre.

Ces mousses contiennent environ 65% de matière céréalière sèche, 30% de glycérol (% pondéraux) et 5% d'eau au final.

## Revendications

1. Mousse végétale **caractérisée en ce qu'**elle est constituée par au moins une farine et/ou au moins un amidon non gélatinisé, un ou plusieurs plastifiants et éventuellement un ou plusieurs additifs, et **en ce que** la teneur en eau est inférieure à 10%, et de préférence de l'ordre de 5%.

2. Mousse végétale **caractérisée en ce qu'**elle est constituée par au moins une farine, un ou plusieurs plastifiants et éventuellement un ou plusieurs additifs, et **en ce que** la teneur en eau est inférieure à 10%, et de préférence de l'ordre de 5%.

3. Mousse végétale **caractérisée en ce qu'**elle est constituée par au moins un amidon non gélatinisé, un ou plusieurs plastifiants et éventuellement un ou plusieurs additifs, et **en ce que** la teneur en eau est inférieure à 10%, et de préférence de l'ordre de 5%.

4. Mousse végétale **caractérisée par** les propriétés suivantes:
- une conductivité thermique comprise entre 0,03 et 0,06 W/m.°K
- et une solubilité dans un fluide aqueux.

5. Procédé de préparation d'une mousse végétale **caractérisé en ce qu'**il consiste :
- à mélanger une farine et/ou de l'amidon avec un ou plusieurs plastifiants, et éventuellement un ou plusieurs additifs,
- à chauffer le mélange,
- à expanser le mélange pour obtenir une mousse dont la teneur en eau est inférieure à 10%, et de préférence de l'ordre de 5%.

6. Procédé de préparation d'une mousse végétale selon la revendication 5, **caractérisé en ce que** les paramètres liés à la cuisson-extrusion sur BC45 sont :
- Débit matière (kg/h) : 1 à 200,
- % d'eau ajoutée : 0 à 10,
- Température (°C) : 20 à 300,
- Vitesse de vis (rpm) : 5 à 600.

7. Procédé de préparation d'une mousse végétale selon l'une des revendications 5 ou 6, **caractérisé en ce que** le plastifiant utilisé est du glycérol dont le pourcentage d'incorporation varie de 1 à 60% en poids et de préférence de 10 à 40%.

8. Procédé de préparation d'une mousse végétale selon l'une des revendications 5 à 7, **caractérisé en ce que** les additifs sont des pigments, des fongicides, des sucres, des agents structurant, des agents expansant, des fibres de cellulose, des alcools, dont le taux d'incorporation varie de 0 à 99%, et de préférence de 0 à 30% en poids.

9. Procédé de préparation d'une mousse végétale selon l'une des revendications 5 à 8, **caractérisé en ce que** le mélange, le chauffage et l'expansion consistent en une cuisson-extrusion bi-vis ou mono-vis à des températures comprises entre 10°C et 300°C, et de préférence entre 20°C et 250°C.
